# FASCICULE DE BREVET EUROPEEN

(11) **EP 3 757 832 B1**
(45) Date de publication et mention de la délivrance du brevet: **17.05.2023**
(21) Numéro de dépôt: 20179737.0
(22) Date de dépôt: 12.06.2020
(51) Int. Cl.: G06F 21/34, G06F 21/32

(54) **SYSTÈME ET PROCÉDÉ D'AUTHENTIFICATION D'UNE PERSONNE DÉTENTRICE D'UN TITRE D'IDENTITÉ À DISTANCE PAR UN TIERS**
SYSTEM UND VERFAHREN ZUR FERNAUTHENTIFIZIERUNG EINER PERSON IN BESITZ EINES AUSWEISES DURCH EINEN DRITTEN
SYSTEM AND METHOD FOR REMOTE AUTHENTICATION OF A PERSON HOLDING AN IDENTITY DOCUMENT BY A THIRD PARTY

(30) Priorité: 24.06.2019 FR 1906780
(43) Date de publication de la demande: 30.12.2020
(73) Titulaire: Imprimerie Nationale, 75016 Paris (FR)
(72) Inventeur: LION, Stéphanie, 59810 LESQUIN (FR)
(74) Mandataire: Atout PI Laplace

(56) Documents cités:
- US-A1- 2016 063 239
- US-A1- 2018 075 231
- US-A1- 2019 089 702
- US-A1- 2019 132 312

## Description

L'invention concerne un système et un procédé pour authentifier à distance une personne détentrice d'un titre d'identité. Elle est par exemple utilisée pour l'authentification d'une personne sollicitant un service auprès d'un établissement bancaire, souhaitant réaliser une transaction financière, ou pour toute autre action requérant l'authentification d'un utilisateur.

Le document DE102014100463 divulgue un procédé d'identification d'un utilisateur au moyen d'un dispositif de communication. Une caractéristique biométrique de l'utilisateur est capturée et transmise à un service d'identification électronique via un réseau de communication. Cette caractéristique biométrique est comparée à une caractéristique biométrique mémorisée au niveau du service d'identification électronique. Les données biométriques de référence pour un individu sont mémorisées par le service d'identification, le stockage des données étant décentralisés.

La demande de brevet WO 2019/074366 décrit un système et un procédé utilisant un appareil de photo numérique pour capturer des informations présentées sur l'écran d'un terminal d'un utilisateur, le procédé calcule ensuite un identificateur pour une donnée biométrique. Un serveur de contrôle compare l'identificateur du document capturé, le descripteur de la caractéristique biométrique, le profil utilisateur à un ensemble de données stockées sur un serveur IDS (Identity Document Server). Le serveur de contrôle est adapté à renvoyer un signal « authentification approuvée ». Le stockage des données de référence associées à l'identité d'une personne se fait au niveau d'un serveur central qui mémorise les informations personnelles pour plusieurs individus. Un tel stockage centralisé peut présenter des problèmes de confidentialité des données en cas d'attaque ou d'intrusion sur le serveur de stockage.

Le document US 2019/132312 concerne un système et une méthode pour valider l'identité de personnes dans le cadre des interactions entre plusieurs personnes.

Le document US 2018/075231 décrit un système de gestion des identités et des accès basé sur le « cloud » qui implémente une authentification unique.

Le document US 2019/089702 concerne un système et un procédé permettant de fournir et de gérer des identités numériques en association avec des dispositifs de communication mobiles.

Dans la suite de la description, on désigne sous l'expression « titre identitaire » tout support contenant des données personnelles, biométriques, pouvant identifier et authentifier une personne, une carte d'identité CNI, un passeport ou tout autre support contenant des données personnelles. Une personne représente un individu ou un utilisateur qui doit être authentifié pour accéder à un service.

L'invention a pour objet un système et un procédé d'authentification d'un détenteur de données, où les données « personnelles propres à une personne sont mémorisées au niveau d'un dispositif personnel propre à la personne et non plus sur un serveur centralisé, comme dans la plupart des systèmes de l'art antérieur.

L'invention concerne un procédé pour authentifier une personne par un dispositif tiers, la personne étant équipée d'un terminal muni d'une application dédiée configurée pour générer un conteneur sécurisé à partir de données personnelles de la personne caractérisé en ce qu'il comporte au moins les étapes suivantes :
- la personne transmet des données personnelles à un dispositif tiers,
- le dispositif tiers transmet une requête de vérification de données RV à un serveur contenant un ensemble de liens associant un titre d'identité à une instance de l'application du terminal associé à la personne détentrice du titre d'identité,
- le serveur utilise au moins une des données du titre d'identité contenue dans la requête Rv pour trouver le lien associé au conteneur sécurisé contenant les données de la personne détentrice du titre,
- le serveur transmet alors une requête d'autorisation Ra à l'application dédiée du terminal afin que la personne s'authentifie et donne l'autorisation d'accéder à au moins une partie des données du conteneur sécurisé,
- sur autorisation de la personne, l'application dédiée du terminal ouvre le conteneur et transmet les données au serveur,
- le serveur transmet ensuite, sans les mémoriser, la partie des données accessibles au dispositif tiers,
- le dispositif tiers après authentification de la personne autorise cette dernière à utiliser un service,
- lorsqu'il n'y a pas d'autorisation, un message de rejet, est envoyé.

Le procédé peut comporter une étape préalable d'enrôlement d'une personne caractérisé en ce qu'elle comporte au moins les étapes suivantes :
- enregistrer un titre d'identité de la personne et ses données personnelles contenues dans un espace de stockage du terminal,
- générer un conteneur sécurisé contenant les données personnelles et mémoriser le conteneur au niveau du terminal,
- transmettre un lien associant de manière unique un titre identitaire et une application mobile gérant le conteneur à un serveur de stockage.

Le procédé peut comporter une étape de lecture d'une carte à puce du titre d'identité mémorisant les données personnelles de la personne pour l'enrôlement.

L'étape d'authentification peut être réalisée par un dispositif de contrôle d'accès aux frontières.

L'invention concerne aussi un système d'authentification par un dispositif tiers d'une personne équipé d'un terminal (muni d'une application dédiée configurée pour générer un conteneur sécurisé, le système utilisant un protocole de communication pour les échanges de données entre les acteurs du système caractérisé en ce qu'il comporte au moins les éléments suivants :
- un serveur comprenant un espace mémoire pour le stockage d'un couple associant un paramètre (identifiant de la personne, instance d'application dédiée),
- ladite application dédiée est configurée pour :
- générer un conteneur sécurisé à partir des données personnelles transmises par une personne, ledit conteneur est mémorisé dans un espace mémoire du terminal de la personne,
- recevoir une requête de vérification de données de la personne émises par un dispositif tiers,
- recevoir une requête d'autorisation d'accès aux données personnelles,
- sur acceptation de la requête d'autorisation d'accès, transmettre au moins une partie des données du conteneur après chiffrement vers le dispositif tiers,
- sur refus de la requête d'autorisation aux données, émettre un message de refus.

Le terminal est par exemple un terminal mobile tel qu'un téléphone mobile comprenant une application mobile.

Les données personnelles peuvent être stockées sur une carte d'identité équipée d'une puce et en ce que l'application dédiée est configurée pour lire les données contenues dans la carte à puce afin d'être enregistrées dans un espace mémoire du terminal de la personne.

Les données personnelles sont, par exemple, stockées sur un titre d'identité et le dispositif tiers est configuré pour contrôler l'identité d'un individu pour le contrôle des frontières.

Le conteneur est par exemple est sécurisé par un ou plusieurs facteurs portés par la personne, tels qu'un code, une donnée biométrique, un mot de passe, une clé asymétrique.

D'autres caractéristiques, détails et avantages de l'invention ressortiront à la lecture de la description faite en référence aux dessins annexés donnés à titre d'exemple illustratif et nullement limitatif et qui représentent, respectivement
[Fig.1] une illustration d'un système permettant l'enrôlement et l'identification d'une personne,
[Fig.2] une illustration des étapes d'enrôlement avec le système de la figure 1, et
[Fig.3] une illustration des étapes d'authentification après enrôlement avec le système de la figure 1.

L'exemple qui suit est donné pour bien illustrer les étapes du procédé selon l'invention pour l'authentification d'une personne titulaire d'une carte d'identité possédant une puce comprenant les informations biométriques et identitaires de la personne. L'invention pourrait s'appliquer aussi pour tout type de documents identitaires contenant des informations pouvant permettre l'identification d'un individu, carte d'identité sans puce, passeport biométrique, etc.

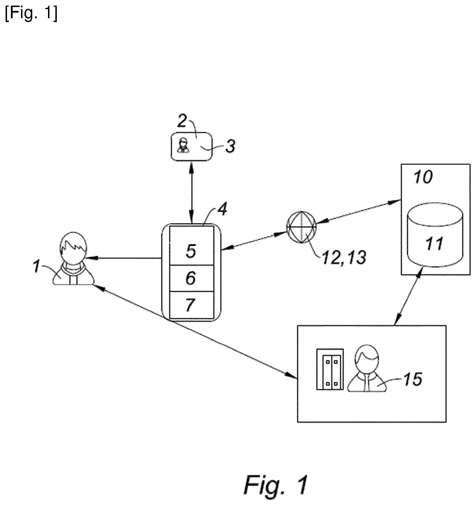

La figure 1 illustre un système permettant l'enrôlement d'une personne. La personne 1 est titulaire d'une carte d'identité 2 comprenant une puce 3. La puce 3 contient l'ensemble des informations biométriques et identitaires propres à la personne. Cette dernière est équipée d'un terminal mobile 4, par exemple un téléphone muni d'une application mobile 5 et d'un espace mémoire 6. Le conteneur sécurisé contenant les données personnelles 7, généré lors de l'enrôlement d'une personne, sera mémorisé dans cet espace mémoire 6, en local à l'application mobile. La génération d'un conteneur fait appel à des logiciels connus de l'homme du métier qui ont pour fonction d'insérer dans un conteneur des données à protéger et de sécuriser l'accès au conteneur. L'accès d'un tel conteneur est limité et requiert une autorisation, qui peut être donnée par l'utilisation d'un mot de passe, par exemple.

Le terminal mobile présente un écran pour la présentation et l'affichage des informations, des échanges. L'écran est par exemple un écran tactile permettant l'entrée de commandes émises par la personne, par exemple pour autoriser ou non l'accès à ses données personnelles.

La lecture des données personnelles présentes sur la carte identitaire peut se faire en utilisant la technologie de radio-identification ou RFID, de communication en champ proche ou NFC, selon la technologie utilisée pour mémoriser les données dans la carte.

Le système comprend un serveur 10 adapté pour enregistrer des liens générés par l'application mobile, le serveur comporte un espace mémoire 11 dédié au stockage des liens générés et des couples L (identifiant d'une personne, instance d'application mobile). Une instance d'application mobile va permettre de retrouver le conteneur associé à une personne au moyen d'un lien et d'un identifiant, par exemple en utilisant une méthode connue de l'art antérieur qui permet d'échanger des données avec une instance spécifique d'application mobile, Androïd, iOS ou Web, la solution connue sous l'abréviation anglo-saxonne « Firebase Cloud messaging ».

Un protocole de communication 12 et un média physique 13 connus de l'homme du métier permettent les échanges de données, d'informations, entre les différents acteurs du système, la personne, l'application mobile, le serveur central et un tiers sur lequel la personne va chercher à s'authentifier.

Sur la figure 1 est représenté un dispositif tiers 15 délivrant des services auxquels la personne veut accéder. Le dispositif tiers est muni d'un logiciel adapté à déchiffrer les données issues du conteneur. Par exemple, le tiers peut être un service bancaire et le service une transaction à effectuer.

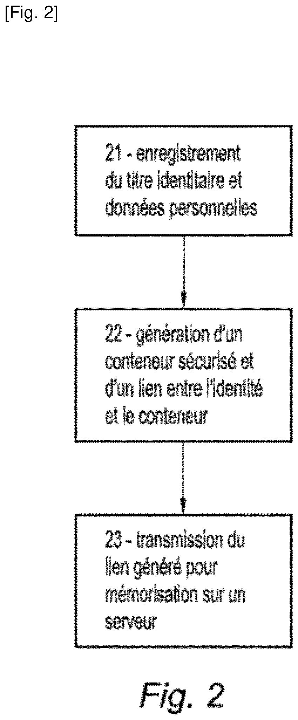

La figure 2 illustre les étapes mises en oeuvre lors de la phase d'enrôlement d'une personne au système.

Lors d'une première étape 21, la personne enregistre le titre identitaire et les données personnelles contenues dans sa carte d'identité, l'enregistrement est effectué par l'application mobile installée sur le téléphone mobile de la personne. Les données extraites de la carte d'identité par lecture de la puce par exemple, sont enregistrées dans l'espace mémoire du terminal mobile. Suite à cet enregistrement, l'application mobile génère, 22, un conteneur sécurisé 7 contenant les données de la carte d'identité et l'application mobile génère un lien entre la carte d'identité et une instance de l'application mobile spécifique. Le lien L (n° de CNI, lien de type Firebase cloud) est transmis, 23, via un protocole de communication au serveur qui va l'enregistrer dans un espace mémoire dédié. Ce lien permet de relier de façon unique la carte d'identité à un conteneur mémorisé sur le terminal mobile de la personne. Le couple (identifiant du titre d'identité, instance d'application mobile, i.e., référence de type Firebaseband) est enregistré dans une base de données centralisée ou bien sur le terminal mobile ou sur les deux pour des soucis de sauvegarde, le serveur ne mémorise pas les données propres à la personne.

Le conteneur est sécurisé par un ou plusieurs facteurs portés par la personne : un code, une donnée biométrique, un token, etc. Les clés d'accès des utilisateurs peuvent être de type « mot de passe » (gérés par le produit), donnée biométrique gérée par le smartphone (par exemple facelD sous iOS) ou une clé asymétrique (RSA, courbes elliptiques ou autres) protée par un token.

La phase d'enrôlement étant réalisée, la personne va pouvoir utiliser le système lorsqu'elle devra s'authentifier vis-à-vis de son titre d'identité sur un dispositif tiers pour accéder à ses services.

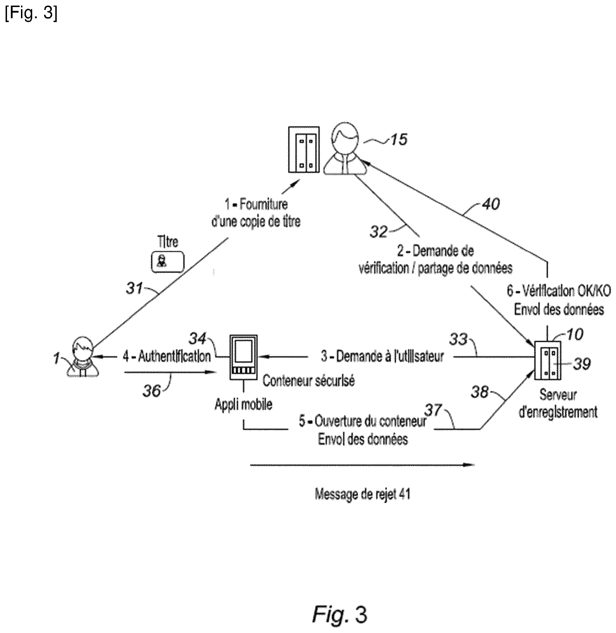

La figure 3 illustre les étapes mises en oeuvre lorsqu'une personne souhaite accéder à un service bancaire, ce dernier va identifier et authentifier cette personne avant d'autoriser la création d'un compte bancaire par exemple.

La personne transmet une copie de sa carte d'identité au système bancaire auquel il souhaite accéder, 31. Le système bancaire 32 va interroger le serveur afin de vérifier les données contenues dans la carte d'identité et obtenir les données liées à celui-ci. Une donnée présente sur la carte d'identité lue par le système bancaire permet de faire le lien avec une application mobile associée. La demande Rv de vérification des données contenues dans la carte d'identité est transmise, 33, au serveur qui a mémorisé les couples (identifiant de la carte d'identité, instance de l'application mobile). A partir de ces informations, le serveur transmet une requête d'autorisation Ra au titulaire de la carte d'identité afin d'accéder aux données ou au moins à une partie des données à la personne titulaire de la carte, 34. La requête Ra d'autorisation est transmise à l'application mobile installée sur le terminal mobile de l'utilisateur et associée au conteneur. La personne reçoit la requête sous la forme d'une notification reçue par l'application mobile. Elle peut consulter, via son application mobile, l'origine de la demande d'accès à ces données personnelles et va accepter ou refuser la demande d'information/ de vérification. Si la personne est d'accord, elle va s'identifier (s'authentifier) sur son terminal mobile, 36. Si la personne ne donne pas l'autorisation d'accès, alors un message de rejet de la demande est émis, 41. L'authentification permet à l'application mobile d'accéder aux données contenues dans le conteneur (ouverture du conteneur 37). L'application mobile retransmet les données du conteneur, après les avoir chiffrées pour protéger leur transmission, vers le serveur, 38. Le serveur ne stocke pas ces données. II, transmet 39 ces données au système bancaire qui va les utiliser afin que la personne puisse réaliser le service. Les données sont déchiffrées du conteneur par l'application mobile, puis elles sont transmises au service bancaire par un protocole de type OpenIDConnect qui permet de les protéger pendant le transport. Le système bancaire utilise les données personnelles déchiffrées pour permettre à la personne d'utiliser le service requis, 40.

Toutes les données personnelles échangées sont protégées. Seul un lien sera stocké sur un serveur central, les données personnelles n'étant pas stockées au niveau du serveur.

Le titre dématérialisé peut être une carte d'identité avec puce, une carte d'identité sans puce, un passeport biométrique, une carte professionnelle, un permis de conduire, etc. Le lecteur de ce titre identitaire sera choisi en fonction de la nature (technologie) du titre, par exemple un lecteur de puce, un lecteur OCR, etc.

Le protocole de communication utilisé pour l'échange des données peut être OpenID Connect, SMALV2.0, connus de l'homme du métier.

Les étapes qui viennent d'être décrites s'appliquent dans le cadre d'un contrôle d'accès aux frontières, le dispositif tiers étant un terminal d'accès équipé de logiciel de contrôle d'identité.

Le système et le procédé selon l'invention offrent notamment les avantages suivants :
- Les données personnelles ne sont plus mémorisées dans un serveur centralisé indépendant du terminal mobile de l'utilisateur,
- Seuls des liens ne contenant pas de données personnelles sont mémorisés et permettent, après autorisation donnée par la personne, d'accéder aux données stockées en local dans un conteneur,
- Lors de l'utilisation de ses données personnelles le porteur est authentifié.

## Revendications

1. Procédé pour authentifier une personne (1) par un dispositif tiers (15), la personne étant équipée d'un terminal (4) muni d'une application dédiée (5) configurée pour générer un conteneur sécurisé (7) à partir de données personnelles de la personne**.** Le procédé comporte au moins les étapes suivantes :
- la personne transmet des données personnelles à un dispositif tiers, (31),
- le dispositif tiers transmet (32) une requête de vérification de données RV à un serveur contenant un ensemble de liens associant un titre d'identité à une instance de l'application du terminal associé à la personne détentrice du titre d'identité,
- le serveur (10) utilise au moins une des données du titre d'identité contenue dans la requête Rv pour trouver le lien associé au conteneur sécurisé contenant les données de la personne détentrice du titre,
- le serveur (10) transmet alors une requête d'autorisation Ra à l'application dédiée du terminal afin que la personne s'authentifie et donne l'autorisation d'accéder à au moins une partie des données du conteneur sécurisé,
- sur autorisation de la personne (36), l'application dédiée du terminal ouvre le conteneur et transmet les données au serveur, (37, 38),
- le serveur transmet ensuite (39), sans les mémoriser, la partie des données accessibles au dispositif tiers,
- le dispositif tiers après authentification de la personne autorise cette dernière à utiliser un service, (40),
- lorsqu'il n'y a pas d'autorisation, un message de rejet, est envoyé, (41).

2. Procédé selon la revendication 1 **caractérisé en ce qu'**il comporte une étape préalable d'enrôlement d'une personne **caractérisé en ce qu'**elle comporte au moins les étapes suivantes :
- enregistrer (21) un titre d'identité de la personne et ses données personnelles contenues dans un espace de stockage du terminal,
- générer (22) un conteneur sécurisé contenant les données personnelles et mémoriser le conteneur au niveau du terminal,
- transmettre (23) un lien associant de manière unique un titre identitaire et une application mobile gérant le conteneur à un serveur de stockage.

3. Procédé selon la revendication 2 **caractérisé en ce qu'**il comporte une étape de lecture d'une carte à puce du titre d'identité mémorisant les données personnelles de la personne pour l'enrôlement.

4. Procédé selon l'une des revendications 1 à 3 **caractérisé en ce que** l'étape d'authentification est réalisée par un dispositif de contrôle d'accès aux frontières.

5. Système d'authentification d'une personne (1) équipé d'un terminal (4) muni d'une application dédiée (5) configurée pour générer un conteneur sécurisé (7) par un dispositif tiers, le système utilisant un protocole de communication (12, 13) pour les échanges de données entre les acteurs du système qui comporte au moins les éléments suivants :
- un serveur (10) comprenant un espace mémoire (11) pour le stockage d'un couple associant un paramètre (identifiant de la personne, instance d'application dédiée),
- ladite application (5) dédiée est configurée pour :
- générer un conteneur sécurisé (7) à partir des données personnelles transmises par une personne, ledit conteneur est mémorisé dans un espace mémoire (6) du terminal de la personne,
- recevoir une requête de vérification de données de la personne émises par un dispositif tiers,
- recevoir une requête d'autorisation d'accès aux données personnelles,
- sur acceptation de la requête d'autorisation d'accès, transmettre au moins une partie des données du conteneur après chiffrement vers le dispositif tiers,
- sur refus de la requête d'autorisation aux données, émettre un message de refus.

6. Système selon la revendication 5 **caractérisé en ce que** le terminal est un terminal mobile tel qu'un téléphone mobile comprenant une application mobile.

7. Système selon l'une des revendications 5 et 6 **caractérisé en ce que** les données personnelles sont stockées sur une carte d'identité équipée d'une puce et **en ce que** l'application dédiée est configurée pour lire les données contenues dans la carte à puce afin d'être enregistrées dans un espace mémoire du terminal (4) de la personne.

8. Système selon l'une des revendications 5 à 7 **caractérisé en ce que** le conteneur est sécurisé par un ou plusieurs facteurs portés par la personne, tels qu'un code, une donnée biométrique, un mot de passe, une clé asymétrique.

9. Système selon l'une des revendications 5 à 8 **caractérisé en ce que** les données personnelles sont stockées sur un titre d'identité et **en ce que** le dispositif tiers est configuré pour contrôler l'identité d'un individu pour le contrôle des frontières.

## Patentansprüche

1. Verfahren zum Authentifizieren einer Person (1) durch eine Drittvorrichtung (15), wobei die Person mit einem Terminal (4), versehen mit einer dedizierten Anwendung (5), ausgestattet ist, die zum Erzeugen eines gesicherten Containers (7) aus persönlichen Daten der Person konfiguriert ist, wobei das Verfahren mindestens die folgenden Schritte umfasst:
- die Person überträgt persönliche Daten zu einer Drittvorrichtung (31),
- die Drittvorrichtung überträgt (32) eine Datenverifizierungsanforderung RV zu einem Server, der einen Satz von Links enthält, die einen Identitätsnachweis einer Instanz der Anwendung des der Person im Besitz des Identitätsnachweises zugeordneten Terminals zuordnen,
- der Server (10) verwendet mindestens eines der in der Anforderung Rv enthaltenen Datenelemente des Identitätsnachweises, um den Link zu finden, der dem gesicherten Container zugeordnet ist, der die Daten der Person im Besitz des Nachweises enthält,
- der Server (10) überträgt dann eine Autorisierungsanforderung Ra zu der dedizierten Anwendung des Terminals, damit die Person sich authentifiziert und die Autorisierung zum Zugreifen auf mindestens einen Teil der Daten des gesicherten Containers erteilt,
- die dedizierte Anwendung des Terminals öffnet nach Autorisierung der Person (36) den Container und überträgt die Daten zum Server, (37, 38),
- der Server überträgt dann (39) den Teil der für die Drittvorrichtung zugänglichen Daten, ohne sie zu speichern,
- die Drittvorrichtung autorisiert die Person nach deren Authentifizierung zur Nutzung eines Dienstes, (40)
- wenn es keine Autorisierung gibt, wird eine Ablehnungsnachricht gesendet, (41).

2. Verfahren nach Anspruch 1, **dadurch gekennzeichnet, dass** es einen Vorabschritt des Registrierens einer Person umfasst, **dadurch gekennzeichnet, dass** es mindestens die folgenden Schritte umfasst:
- Abspeichern (21) eines Identitätsnachweises der Person und ihrer persönlichen Daten, die in einem Speicherraum des Terminals enthalten sind,
- Erzeugen (22) eines gesicherten Containers, der die persönlichen Daten enthält, und Speichern des Containers im Terminal,
- Übertragen (23) eines Links, der einen Identitätsnachweis und eine den Container verwaltende mobile Anwendung eindeutig einander zuordnet, zu einem Speicherserver.

3. Verfahren nach Anspruch 2, **dadurch gekennzeichnet, dass** es einen Schritt des Lesens einer Chipkarte des Identitätsnachweises umfasst, der die persönlichen Daten der Person für das Registrieren speichert.

4. Verfahren nach einem der Ansprüche 1 bis 3, **dadurch gekennzeichnet, dass** der Authentifizierungsschritt von einer Grenzkontrollvorrichtung durchgeführt wird.

5. System zum Authentifizieren einer Person (1), ausgestattet mit einem Terminal (4), versehen mit einer dedizierten Anwendung (5), die zum Erzeugen eines durch eine Drittvorrichtung gesicherten Containers (7) konfiguriert ist, wobei das System ein Kommunikationsprotokoll (12, 13) für den Austausch von Daten zwischen den Akteuren des Systems verwendet, das mindestens die folgenden Elemente aufweist:
- einen Server (10), umfassend einen Speicherplatz (11) zum Speichern eines Paares, das einen Parameter (Kennung der Person, dedizierte Anwendungsinstanz) zuordnet,
- wobei die dedizierte Anwendung (5) konfiguriert ist zum:
- Erzeugen eines gesicherten Containers (7) aus den von einer Person übertragenen persönlichen Daten, wobei der Container in einem Speicherplatz (6) des Terminals der Person gespeichert ist,
- Empfangen einer Anforderung zum Verifizieren von durch eine Drittvorrichtung ausgegebenen Daten der Person,
- Empfangen einer Anforderung zum Autorisieren eines Zugriffs auf die persönlichen Daten,
- Übertragen, nach Annahme der Anforderung zum Autorisieren eines Zugriffs, mindestens eines Teils der Daten von dem Container, nach deren Verschlüsselung, zu der Drittvorrichtung,
- Ausgeben einer Verweigerungsmeldung bei Verweigern der Anforderung zum Autorisieren für die Daten.

6. System nach Anspruch 5, **dadurch gekennzeichnet, dass** das Terminal ein mobiles Terminal wie ein eine mobile Anwendung umfassendes Mobiltelefon ist.

7. System nach einem der Ansprüche 5 und 6, **dadurch gekennzeichnet, dass** die persönlichen Daten auf einer mit einem Chip ausgestatteten Ausweiskarte gespeichert sind, und dadurch, dass die dedizierte Anwendung zum Lesen der auf der Chipkarte enthaltenen Daten konfiguriert ist, um sie in einem Speicherplatz des Terminals (4) der Person abzuspeichern.

8. System nach einem der Ansprüche 5 bis 7, **dadurch gekennzeichnet, dass** der Container durch einen oder mehrere von der Person getragene Faktoren gesichert ist, wie z. B. ein Code, eine biometrische Information, ein Passwort, ein asymmetrischer Code.

9. System nach einem der Ansprüche 5 bis 8, **dadurch gekennzeichnet, dass** die persönlichen Daten auf einem Identitätsnachweis gespeichert sind, und dadurch, dass die Drittvorrichtung zum Kontrollieren der Identität eines Individuums für die Grenzkontrolle konfiguriert ist.

## Claims

1. A method for authenticating a person (1) through a third-party device (15), the person being equipped with a terminal (4) provided with a dedicated application (5) configured to generate a secured container (7) from personal data of the person, the method comprising at least the following steps of:
- the person transmitting personal data to a third-party device (31);
- the third-party device transmitting (32) a data verification request RV to a server containing a set of links associating an identity document with an instance of the application of the terminal associated with the person holding the identity document;
- the server (10) using at least one item of the data of the identity document contained in the request Rv to find the link associated with the secured container containing the data of the person holding the document;
- the server (10) then transmitting an authorisation request Ra to the dedicated application of the terminal so that the person authenticates themselves and grants the authorisation to access at least a portion of the data of the secured container;
- upon authorisation of the person (36), the dedicated application of the terminal opening the container and transmitting the data to the server, (37, 38);
- the server then transmitting (39) the portion of the data accessible to the third-party device, without storing said data;
- the third-party device, following the authentication of the person, authorising them to use a service, (40);
- sending a rejection message when authorisation is not granted, (41).

2. The method according to claim 1, **characterised in that** it comprises a prior step of enrolling a person, **characterised in that** it comprises at least the following steps of:
- recording (21) an identity document of the person and their personal data contained in a storage space of the terminal;
- generating (22) a secured container containing the personal data and storing the container in the terminal;
- transmitting (23) a link uniquely associating an identity document and a mobile application managing the container to a storage server.

3. The method according to claim 2, **characterised in that** it comprises a step of reading a smart card of the identity document storing the personal data of the person for the enrolment.

4. The method according to any of claims 1 to 3, **characterised in that** the authentication step is carried out by a border access control device.

5. A system for authenticating a person (1) equipped with a terminal (4) provided with a dedicated application (5) configured to generate a container (7) secured by a third-party device, the system using a communication protocol (12, 13) for the data exchanges between the participants of the system, the system having at least the following elements:
- a server (10) comprising a memory space (11) for storing a pair associating a parameter (identifier of the person, dedicated application instance);
- said dedicated application (5) is configured for:
- generating a secured container (7) from the personal data transmitted by a person, said container is stored in a memory space (6) of the terminal of the person;
- receiving a request to verify data of the person emitted by a third-party device;
- receiving a request to authorise access to the personal data;
- upon acceptance of the request to authorise access, transmitting at least a portion of the data, following encryption thereof, from the container to the third-party device;
- upon denial of the request to authorise access to the data, emitting a denial message.

6. The system according to claim 5, **characterised in that** the terminal is a mobile terminal such as a mobile telephone comprising a mobile application.

7. The system according to any of claims 5 and 6, **characterised in that** the personal data are stored on an identity card equipped with a chip and **in that** the dedicated application is configured to read the data contained in the smart card in order to be recorded in a memory space of the terminal (4) of the person.

8. The system according to any of claims 5 to 7, **characterised in that** the container is secured by one or more factors carried by the person, such as a code, a biometric datum, a password, an asymmetric key.

9. The system according to any of claims 5 to 8, **characterised in that** the personal data are stored on an identity document and **in that** the third-party device is configured to check the identity of an individual for border controls.
